# EUROPEAN PATENT SPECIFICATION

(11) **EP 3 264 007 B1**
(45) Date of publication and mention of the grant of the patent: **13.03.2019**
(21) Application number: 17178100.8
(22) Date of filing: 27.06.2017
(51) Int. Cl.: F24H 9/12, F24D 3/10, F24D 19/10

(54) **A DOMESTIC HEATING SYSTEM AND A LOADING UNIT THEREFORE**
HAUSHEIZUNGSANLAGE UND LADEEINHEIT DAFÜR
SYSTÈME DE CHAUFFAGE DOMESTIQUE ET UNITÉ DE CHARGEMENT CORRESPONDANTE

(30) Priority: 30.06.2016 SE 1650954
(43) Date of publication of application: 03.01.2018
(73) Proprietor: ESBE AB, 333 75 Reftele (SE)
(72) Inventor: BENGTSSON, Dan, 333 93 Skeppshult (SE)
(74) Representative: AWA Sweden AB

(56) References cited:
- EP-A1- 2 077 423
- EP-A1- 2 990 702
- CN-U- 204 477 390
- CN-U- 204 730 465
- DE-A1- 4 002 502
- FR-A1- 2 389 846
- GB-A- 1 433 355

## Description

### Technical Field

The present invention concerns a domestic heating system comprising a solid fuel boiler to heat water, a storage tank to store heated water, and a loading arrangement interconnecting the solid fuel boiler and the storage tank, wherein the loading arrangement comprises a supply line to lead water from a top of the solid fuel boiler to a top of the storage tank, a return line to lead water from a bottom of the storage tank to a bottom of the solid fuel boiler, a shunt line to lead water from the supply line to the return line, and a pump to move water through these lines.

### Prior Art

Domestic heating systems according to the preamble are well known in the art for instance from EP 2 077 423 A1. One of the problems encountered in such systems is boiler corrosion, which is promoted when boiler temperature is below about 60°C. This is one reason for use of a loading arrangement, which, when starting to fire the boiler, by keeping lines to the storage tank closed can ensure that boiler temperature rises quickly to a temperature above about 60°C. Once the temperature in the boiler has risen above about 60°C, one usually starts loading of the storage tank with heated water from the boiler. This however leads to return of cold water from the storage tank to the boiler, which thereby risks to cool down below the desired about 60°C, especially since the storage tank usually holds a much greater volume of water than the boiler itself. Hence, at least initially flow of heated water to the storage tank, and thus return of cold water from the storage tank to be boiler, has to be throttled until temperature of water in return from the storage tank to the boiler reaches a level, which is no longer harmful to the boiler from a temperature point of view.

Boiler corrosion is a general problem encountered even in domestic heating systems without storage tanks, that is systems where a boiler distributes heated water directly to radiators connected thereto, such as revealed in for instance FR 2 389 846 A1, DE 40 02 502 A1, and CN 204 730 465 U. In such systems it is known to monitor temperature of water leaving the boiler through an outgoing line and/or returning to the boiler through an incoming line, and to use at least one valve and a shunt line to return heated water from the outgoing line directly to the incoming line as long as water temperature is below a set value. However, as such systems do not comprise any storage tank, they do not provide any means to efficiently load a storage tank with heated water.

Another problem encountered in domestic heating systems according to the preamble is that loading of the storage tank with heated water tends to be ineffective if done the wrong way. Usually a storage tank has a rather large capacity, such as for instance 500 I, and requires long time to be heated throughout. Therefore one usually strives to achieve so-called thermal stratification, which requires a gentle circulation of water between the boiler and the storage tank such that different temperatures are preserved between top and bottom regions of the storage tank.

From the above it is apparent that in domestic heating systems of the type in question bad control either of a return temperature to a boiler or of a temperature in a top region of a storage tank tends to deteriorate operation of a domestic heating system.

### Object of the Invention

In the light of the above it is an object of the invention is to mitigate the prior art problems by improving a domestic heating system according to the preamble thus that temperatures inside the domestic heating system are better controlled and thereby the operation of the entire system is improved.

### Brief Summary of the Invention

According to the present invention in a heating system according to the preamble the known problems are mitigated in that the loading arrangement further comprises a first 3-way valve, which is arranged in the supply line and is connected to the shunt line, and a second 3-way valve, which is arranged in the return line and is connected to the shunt line, wherein both 3-way valves are thermally controlled, wherein the first 3-way valve is set to keep the shunt line open and the supply line past the first 3-way valve to the storage tank closed as long as water temperature at the first 3-way valve is below a set first temperature level T1 and to start opening of the supply line past the first 3-way valve to the storage tank as soon as water temperature at the first 3-way valve rises above said first temperature level T1, and wherein the second 3-way valve is set to keep the shunt line open as long as water temperature at the second 3-way valve is below a set second temperature level T2, which is lower than said first temperature level T1 but about 60°C to prevent corrosion, and to start closing of the shunt line and opening of the return line from the storage tank past the second 3-way valve as soon as water temperature at the second 3-way valve rises above said second temperature level T2.

By means of the first 3-way valve, at low water temperatures, water is led through the shunt line back to the boiler instead of to the storage tank, which leads to quick heating of the boiler when fired up. Once a water temperature sufficiently high to prevent corrosion has been reached inside the boiler, such as for instance 60°C, the second 3-way valve allows a minor flow from a bottom part of the storage tank to the boiler, by which a return water temperature to the boiler is lowered to a level, that ensures that an appreciable temperature difference is upheld between bottom and top parts of the boiler, which promotes quick heating. When under these circumstances the water temperature inside the boiler has risen to for instance 80°C, the first 3-way valve opens towards the storage tank. By this actual loading of the storage tank with heated water starts, however with a throttled return to the boiler thanks to the second 3-way valve. This promotes stratification inside of the storage tank and keeps water in return to the boiler at a temperature level sufficiently high to maintain corrosion safe conditions inside the boiler but sufficiently low to uphold said appreciable temperature difference. Finally, once the water temperature even in a bottom region of the storage tank has risen above for instance 60°C, the second 3-way valve opens fully between the storage tank and the boiler, thereby blocking the shunt line and equalizing temperatures inside the boiler and the storage tank on a level above for instance 80°C. Thus, thanks to the invention temperatures inside a domestic heating system can be better controlled than before, which leads to a major improvement of the overall operation of the system.

In the domestic heating system said first temperature level T1 is from about 75 to 85°C, and preferably 80°C, wherein said second temperature level T2 is from about 55 to 65°C, and preferably 60°C. These temperature levels have proven to be suitable in order to achieve optimum heating conditions.

Preferably the pump is arranged in the return line between the second 3-way valve and the solid fuel boiler. By this the pump is kept at the lowest possible temperature which is beneficial to life.

Preferably, in the domestic heating system the 3-way valves form an integrated part of a loading unit comprising a housing. By providing a unit integrated in a housing install is simplified both when it comes to plumbing and adjustment.

According to an alternative in the domestic heating system the pump too forms an integrated part of the loading unit, thereby simplifying install.

Preferably, in either one of the above two cases the housing of the loading unit is thermally insulated. The insulated housing can simply comprise of two halves, which are made of expanded plastics and encapsulate the entire loading unit, thus that heat leakage is avoided.

According to one embodiment in the domestic heating system the shunt line comprises interconnected valve flanges of the 3-way valves. By this no extra pieces of pipe have to be provided, which simplifies install and saves space.

According to a preferred embodiment, in the domestic heating system the first 3-way valve, in order to cope with water volume changes, below said first temperature level T1 is set to uphold a leak flow in the supply line between the solid fuel boiler and the storage tank. By providing a leak flow no extra measures, such as installing an extra expansion vessel, have to be undertaken.

### Brief Description of the Drawings

In the drawings a preferred embodiment of a domestic heating system according to the invention is shown schematically, wherein
Fig. 1 shows a boiler and a storage tank, which are interconnected by means of a charging arrangement, and
Figs. 2a-c illustrate different settings of 3-way valves of the charging arrangement.

### Detailed Description of the Preferred Embodiment

In the following the preferred embodiment of the invention is described with reference being had to the accompanying drawings, in which like reference numbers denote like parts.

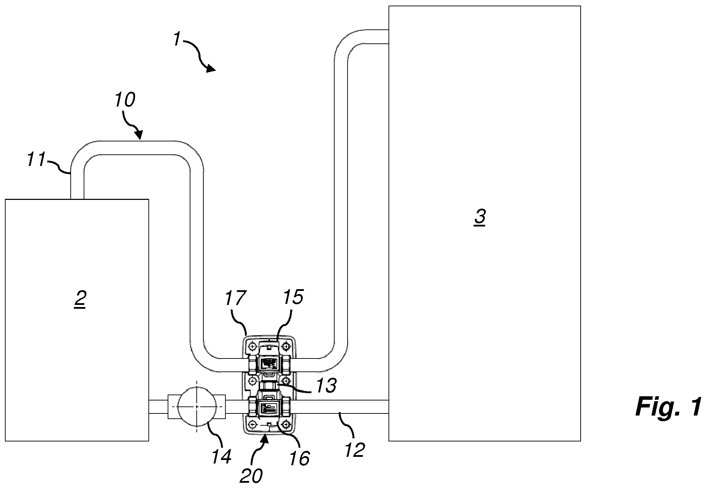

In fig. 1 a domestic heating system according to the preferred embodiment is generally denoted 1. As the drawings are schematic, not all parts of the domestic heating system 1 are shown, such as lines leading to radiators or water taps.

The shown domestic heating system 1 comprises a solid fuel boiler 2, that is a boiler which is fired by means of a solid fuel, such as wood, which does not permit temperature adjustment by throttling in the way that for instance oil or gas allow. Hence, to achieve high efficiency and to provide for burning at temperatures sufficiently high from an environmental point of view, the boiler 2 is connected to a storage tank 3 by means of a charging arrangement generally depicted 10. The storage tank 3 can take up excessive heat from firing and store it for use when firing has ceased.

The charging arrangement 10 comprises a supply line 11, which is to lead water from a top of the boiler 2 to a top of the storage tank 3, and a return line 12, which is to lead water from a bottom of the storage tank 3 to a bottom of the boiler 2. Further, the charging arrangement 10 comprises a shunt line 13, which is to lead water from the supply line 11 to the return line 12, and a pump 14, which is to move water through lines 11-13 and is arranged in the return line 12 close to the boiler 2.

In the charging arrangement 10 a first 3-way valve 15 is arranged in the supply line 11 and is connected to a top end of the shunt line 13, and a second 3-way valve 16 is arranged in the return line 12 between the storage tank 3 and the pump 14 and is connected to a bottom end of the shunt line 13.

As can be seen, in the preferred embodiment the shunt line 13 actually comprises interconnected valve flanges of the 3-way valves 15, 16, which renders install particularly easy. Further it can be seen that both 3-way valves 15, 16 are integrated in a common housing 17, which preferably is thermally insulated. By this install is rendered even more easy and heat leakage limited.

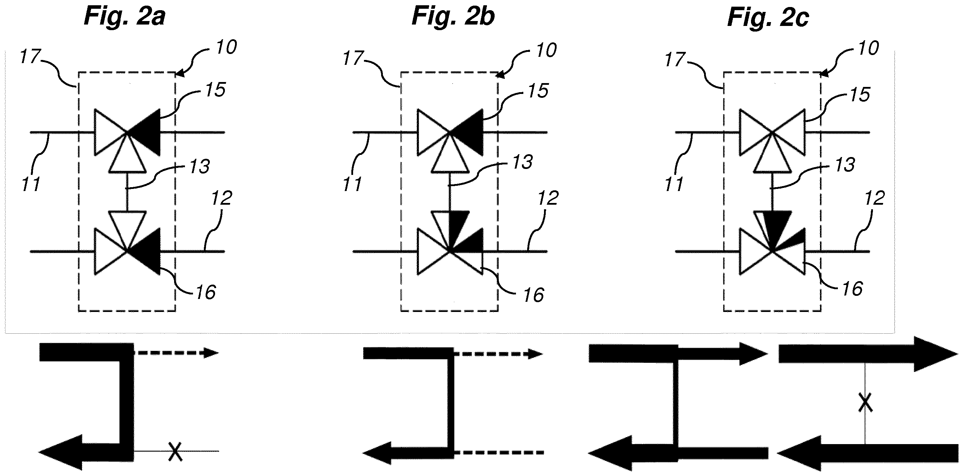

Now, with reference being had to figs. 1 and 2a-c, function of the domestic heating system 1 as well as some temperature data is revealed, wherein in the bottom parts of figs. 2a-c thick, thin, dashed and crossed over arrows are used to illustrate a large flow of water, a throttled flow of water, a leak flow of water and a stopped flow of water, respectively.

The first 3-way valve 15 is thermostatically controlled (other thermal control means, such as electronic ones, are of course possible) and set to keep the shunt line 13 open and the supply line 11 past the first 3-way valve 15 to the storage tank 3 closed as long as water temperature at the first 3-way valve 15 is below a set first temperature level T1 of preferably 80°C (cf. fig. 2a) and to start opening of the supply line 11 past the first 3-way valve 15 to the storage tank 3 as soon as water temperature at the first 3-way valve 15 rises above said first temperature level T1 (cf. fig. 2c). Further, in order to cope with water volume changes the first 3-way valve 15, below said first temperature level T1 is set to uphold a leak flow in the supply line 11 between the solid fuel boiler 2 and the storage tank 3.

The second 3-way valve 16 is thermostatically controlled (other thermal control means, such as electronic ones, are of course possible) and set to keep the shunt line 13 open as long as water temperature at the second 3-way valve 16 is below a set second temperature level T2 of preferably 60°C (cf. fig. 2a), that is lower than said first temperature level T1 of preferably 80°C, and to start closing of the shunt line 13 and opening of the return line 12 from the storage tank 3 past the second 3-way valve 16 as soon as water temperature at the second 3-way valve 16 rises above said second temperature level T2 (cf. figs. 2b-c) until the shunt line 13 is fully closed and the line from the storage tank 3 to the boiler 2 is fully open.

The advantages of the domestic heating system 1 according to the present invention have been described explicitly in the introductory part of the application. They comprise quick heating of the boiler 2, keeping of water temperature inside the boiler 2 on a sufficiently high level even while loading storage tank 3 with heated water, and promoting of stratification inside of the storage tank 3. Hence the present invention renders it possible to optimally control temperatures inside the entire domestic heating system 1, which betters the overall operation thereof.

## Claims

1. A domestic heating system (1) comprising a solid fuel boiler (2) to heat water, a storage tank (3) to store heated water, and a loading arrangement (10) interconnecting the solid fuel boiler (2) and the storage tank (3),
wherein the loading arrangement (10) comprises a supply line (11) to lead water from a top of the solid fuel boiler (2) to a top of the storage tank (3),
a return line (12) to lead water from a bottom of the storage tank (3) to a bottom of the solid fuel boiler (2),
a shunt line (13) to lead water from the supply line (11) to the return line (12), and
a pump (14) to move water through these lines (11-13),
**characterized in that** the loading arrangement (10) further comprises
a first 3-way valve (15), which is arranged in the supply line (11) and is connected to the shunt line (13), and
a second 3-way valve (16), which is arranged in the return line (12) and is connected to the shunt line (13),
wherein both 3-way valves (15, 16) are thermally controlled,
wherein the first 3-way valve (15) is set to keep the shunt line (13) open and the supply line (11) past the first 3-way valve (15) to the storage tank (3) closed as long as water temperature at the first 3-way valve (15) is below a set first temperature level T1 and to start opening of the supply line (11) past the first 3-way valve (15) to the storage tank (3) as soon as water temperature at the first 3-way valve (15) rises above said first temperature level T1, and
wherein the second 3-way valve (16) is set to keep the shunt line (13) open as long as water temperature at the second 3-way valve (16) is below a set second temperature level T2, which is lower than said first temperature level T1 but about 60°C to prevent corrosion, and to start closing of the shunt line (13) and opening of the return line (12) from the storage tank (3) past the second 3-way valve (16) as soon as water temperature at the second 3-way valve (16) rises above said second temperature level T2.

2. The domestic heating system (1) according to claim 1, wherein said first temperature level T1 is from about 75 to 85°C, and preferably 80°C, and wherein said second temperature level T2 is from about 55 to 65°C, and preferably 60°C.

3. The domestic heating system (1) according to claim 1 or 2, wherein the pump (14) is arranged in the return line (12) between the second 3-way valve (16) and the solid fuel boiler (2).

4. The domestic heating system (1) according to any one of claims 1-3, wherein the 3-way valves (15, 16) form an integrated part of a loading unit (20) comprising a housing (17).

5. The domestic heating system (1) according to claim 4, wherein the pump (14) too forms an integrated part of the loading unit (20).

6. The domestic heating system (1) according to claim 4 or 5, wherein the housing (17) of the loading unit (20) is thermally insulated.

7. The domestic heating system (1) according to any one of the previous claims, wherein the shunt line (13) comprises interconnected valve flanges of the 3-way valves (15, 16).

8. The domestic heating system (1) according to any one of the previous claims, wherein the first 3-way valve (15), in order to cope with water volume changes, below said first temperature level T1 is set to uphold a leak flow in the supply line (11) between the solid fuel boiler (2) and the storage tank (3).

## Patentansprüche

1. Heimisches Heizsystem (1), umfassend einen Kessel für feste Brennstoffe (2) zum Erhitzen von Wasser, einen Speichertank (3) zum Speichern von erhitztem Wasser und eine Ladeanordnung (10), die den Kessel für feste Brennstoffe (2) und den Speichertank (3) miteinander verbinden,
wobei die Ladeanordnung (10) eine Zuleitung (11) zum Leiten von Wasser von einem Oberteil des Kessels für feste Brennstoffe (2) zu einem Oberteil des Speichertanks (3) umfasst,
eine Rückleitung (12) zum Leiten von Wasser von einem Boden des Speichertanks (3) zu einem Boden des Kessels für feste Brennstoffe (2),
eine Nebenschlussleitung (13) zum Leiten von Wasser von der Zuleitung (11) zur Rückleitung (12) und
eine Pumpe (14) zum Bewegen von Wasser durch diese Leitungen (11-13),
**dadurch gekennzeichnet, dass** die Ladevorrichtung (10) weiterhin umfasst
ein erstes 3-Wege-Ventil (15), das in der Zuleitung (11) angeordnet ist und an die Nebenschlussleitung (13) angeschlossen ist, und
ein zweites 3-Wege-Ventil (16), das in der Rückleitung (12) angeordnet ist und an die Nebenschlussleitung (13) angeschlossen ist,
wobei beide 3-Wege-Ventile (15, 16) thermisch gesteuert sind,
wobei das erste 3-Wege-Ventil (15) eingestellt ist, um die Nebenschlussleitung (13) offen zu halten und die Zuleitung (11) nach dem ersten 3-Wege-Ventil (15) zum Speichertank (3) geschlossen zu halten, solange die Wassertemperatur am ersten 3-Wege-Ventil (15) unter einem eingestellten ersten Temperaturpegel T1 liegt und um das Öffnen der Zuleitung (11) nach dem ersten 3-Wege-Ventil (15) zum Speichertank (3) zu starten, sobald die Wassertemperatur am ersten 3-Wege-Ventil (15) über den genannten ersten Temperaturpegel T1 steigt, und
wobei das zweite 3-Wege-Ventil (16) eingestellt ist, um die Nebenschlussleitung (13) offen zu halten, solange die Wassertemperatur am zweiten 3-Wege-Ventil (16) unter einem eingestellten zweiten Temperaturpegel T2, der niedriger ist als der genannte erste Temperaturpegel T1, jedoch über 60 °C liegt, um Korrosion zu verhindern, und um das Schließen der Nebenschlussleitung (13) und das Öffnen der Rückleitung (12) vom Speichertank (3) nach dem zweiten 3-Wege-Ventil (16) zu starten, sobald die Wassertemperatur am zweiten 3-Wege-Ventil (16) über den genannten zweiten Temperaturpegel T2 steigt.

2. Heimisches Heizsystem (1) nach Anspruch 1, wobei der genannte erste Temperaturpegel T1 von ungefähr 75 bis 85 °C und bevorzugt 80 °C beträgt und wobei der genannte zweite Temperaturpegel T2 von ungefähr 55 bis 65 °C und bevorzugt 60 °C beträgt.

3. Heimisches Heizsystem (1) nach Anspruch 1 oder 2, wobei die Pumpe (14) in der Rückleitung (12) zwischen dem zweiten 3-Wege-Ventil (16) und dem Kessel für feste Brennstoffe (2) angeordnet ist.

4. Heimisches Heizsystem (1) nach irgendeinem der Ansprüche 1-3, wobei die 3-Wege-Ventile (15, 16) einen festen Bestandteil einer Ladeeinheit (20) bilden, die ein Gehäuse (17) umfasst.

5. Heimisches Heizsystem (1) nach Anspruch 4, wobei die Pumpe (14) ebenfalls einen festen Bestandteil der Ladeeinheit (20) bildet.

6. Heimisches Heizsystem (1) nach Anspruch 4 oder 5, wobei das Gehäuse (17) der Ladeeinheit (20) thermisch gedämmt ist.

7. Heimisches Heizsystem (1) nach irgendeinem der voranstehenden Ansprüche, wobei die Nebenschlussleitung (13) miteinander verbundene Ventilflansche der 3-Wege-Ventile (15, 16) umfasst.

8. Heimisches Heizsystem (1) nach irgendeinem der voranstehenden Ansprüche, wobei das erste 3-Wege-Ventil (15) eingestellt ist, um eine Schleichmenge in der Zuleitung (11) zwischen dem Kessel für feste Brennstoffe (2) und dem Speichertank (3) aufrecht zu erhalten, um Änderungen des Wasservolumens zu bewältigen.

## Revendications

1. Système de chauffage domestique (1) comprenant une chaudière à combustible solide (2) destinée à chauffer de l'eau, un réservoir de stockage (3) destiné à stocker de l'eau chauffée, et un ensemble de chargement (10) reliant entre eux la chaudière à combustible solide (2) et le réservoir de stockage (3),
dans lequel l'ensemble de chargement (10) comprend une conduite d'alimentation (11) destinée à guider de l'eau d'une partie supérieure de la chaudière à combustible solide (2) vers une partie supérieure du réservoir de stockage (3),
une conduite de retour (12) destinée à guider de l'eau d'une partie inférieure du réservoir de stockage (3) vers une partie inférieure de la chaudière à combustible solide (2),
une conduite de dérivation (13) destinée à guider de l'eau de la conduite d'alimentation (11) vers la conduite de retour (12), et
une pompe (14) destinée à déplacer de l'eau à travers ces conduites (11-13),
**caractérisé en ce que** l'ensemble de chargement (10) comprend en outre
une première valve à trois voies (15) disposée dans la conduite d'alimentation (11) et reliée à la conduite de dérivation (13), et
une deuxième valve à trois voies (16) disposée dans la conduite de retour (12) et reliée à la conduite de dérivation (13),
dans lequel les deux valves à trois voies (15, 16) sont commandées thermiquement,
dans lequel la première valve à trois voies (15) est réglée pour maintenir la conduite de dérivation (13) ouverte et la conduite d'alimentation (11) en aval de la première valve à trois voies (15) vers le réservoir de stockage (3) fermée tant que la température de l'eau au niveau de la première valve à trois voies (15) est inférieure à un premier niveau de température réglé T1, et pour commencer à ouvrir la conduite d'alimentation (11) en aval de la première valve à trois voies (15) vers le réservoir de stockage (3) dès que la température de l'eau au niveau de la première valve à trois voies (15) augmente au-dessus dudit premier niveau de température T1, et
dans lequel la deuxième valve à trois voies (16) est réglée pour maintenir la conduite de dérivation (13) ouverte tant que la température de l'eau au niveau de la deuxième valve à trois voies (16) est inférieure à un deuxième niveau de température réglé T2, lequel est inférieur audit premier niveau de température T1 mais à environ 60 °C pour empêcher la corrosion, et pour commencer à fermer la conduite de dérivation (13) et à ouvrir la conduite de retour (12) à partir du réservoir de stockage (3) en aval de la deuxième valve à trois voies (16) dès que la température de l'eau au niveau de la deuxième valve à trois voies (16) augmente au-dessus dudit deuxième niveau de température T2.

2. Système de chauffage domestique (1) selon la revendication 1, dans lequel ledit premier niveau de température T1 varie entre environ 75 et 85 °C, et s'élève de préférence à 80 °C, et dans lequel ledit deuxième niveau de température T2 varie entre environ 55 et 65 °C, et s'élève de préférence à 60 °C.

3. Système de chauffage domestique (1) selon la revendication 1 ou 2, dans lequel la pompe (14) est disposée dans la conduite de retour (12) entre la deuxième valve à trois voies (16) et la chaudière à combustible solide (2).

4. Système de chauffage domestique (1) selon l'une quelconque des revendications 1-3, dans lequel les valves à trois voies (15, 16) forment une partie intégrante d'une unité de chargement (20) comprenant un boîtier (17).

5. Système de chauffage domestique (1) selon la revendication 4, dans lequel la pompe (14) forme également une partie intégrante de l'unité de chargement (20).

6. Système de chauffage domestique (1) selon la revendication 4 ou 5, dans lequel le boîtier (17) de l'unité de chargement (20) est isolé thermiquement.

7. Système de chauffage domestique (1) selon l'une quelconque des revendications précédentes, dans lequel la conduite de dérivation (13) comprend des brides de valve interconnectées des valves à trois voies (15, 16).

8. Système de chauffage domestique (1) selon l'une quelconque des revendications précédentes, dans lequel la première valve à trois voies (15), pour s'adapter aux changements de volume d'eau, en dessous dudit premier niveau de température T1 est réglée pour maintenir un écoulement de fuite dans la conduite d'alimentation (11) entre la chaudière à combustible solide (2) et le réservoir de stockage (3).
